# EUROPEAN PATENT APPLICATION

(11) **EP 2 746 920 A1**
(43) Date of publication of application: **25.06.2014**
(21) Application number: 12198494.2
(22) Date of filing: 20.12.2012
(51) Int. Cl.: G06F 3/0488

(54) **System and method for displaying characters using gestures**

(71) Applicant: BlackBerry Limited, Waterloo, ON N2K 0A7 (CA)
(72) Inventor: Pasquero, Jerome, Montreal, Quebec H2Y 2P5 (CA); Lau, Tiphanie, Vancouver BC, V5X 2B3 (CA); Sarrazin, Jacou, Montreal, Quebec H2Y 2P5 (CA); McKenzie, Donald Somerset McCulloch, Waterloo, Ontario N2L 3W8 (CA)
(74) Representative: Moore, Barry

(57) **Abstract**

A method and a system are provided for displaying a character on an electronic device. The method includes displaying a multi-segment display on a touch-sensitive display. A touch gesture is detected over the multi-segment display. The electronic device the activates segments of the multi-segment display that correspond to the touch gesture, and then displays the character that corresponds to the activated segments. In an example embodiment, the multi-segment display is a seven-segment display.

## Description

### TECHNICAL FIELD:

The following relates generally to displaying a character using a gesture.

### DESCRIPTION OF THE RELATED ART

Many electronic devices, including mobile devices, include one or more touch-sensitive input mechanisms such as a touch-sensitive display or a touch pad to provide inputs to the electronic device. The user can provide an input to the touch-sensitive component using an object (e.g. a finger of a user or a stylus) to perform a gesture near or directly on the surface of the touch-sensitive component. For example, the gesture can include swiping the object upwards or downwards across a portion of the touch-sensitive display to scroll content displayed on the touch-sensitive display.

### GENERAL

An example method for displaying a character on an electronic device is provided. The method includes: displaying a multi-segment display; detecting a touch gesture overlaid the multi-segment display; activating segments of the multi-segment display that correspond to the touch gesture; and displaying the character that corresponds to the activated segments.

In an example aspect, the multi-segment display is initially displayed in a neutral mode. In another aspect, the method further includes highlighting the activated segments. In another example aspect, the method further includes no longer displaying the multi-segment display when the character is displayed. In another example aspect, the multi-segment display is initially displayed in a neutral mode and the method further includes: highlighting the activated segments; and returning the multi-segment display to the neutral mode when the character is displayed overlaid the multi-segment display. In another example aspect, the character is displayed in a different font than the multi-segment display. In another example aspect, the segments are activated by detecting that the touch gesture position coincides with the segments. In another example aspect, the multi-segment display is used to select a time or a date. In another example aspect, the multi-segment display is a seven-segment display. In another example aspect, the method further includes receiving an input to change the displayed character to a modified character; displaying the modified character; and saving a mapping associating the touch gesture with the modified character. In another example aspect, the input 22317328.1 includes receiving another touch gesture to display the modified character, and the modified character is a preceding character or a proceeding character relative to the displayed character in a character series. In another example aspect, the method further includes displaying the modified character when detecting the same touch gesture again. In another example aspect, another multi-segment display is displayed, and the method further includes: highlighting segments on the other multi-segment display that correspond to a suggested character; detecting a selection input on the other multi-segment display; and displaying the suggested character. In another example aspect, the selection input is a tap gesture.

An example method for displaying a character on an electronic device is provided. The method includes: displaying a first multi-segment display and a second multi-segment display; detecting a touch gesture overlaid one of the first and the second multi-segment displays; activating segments of the one of the first and the second multi-segment displays, the segments corresponding to the touch gesture; displaying a first character associated with the one of the first and the second multi-segment displays, the first character corresponding to the activated segments; and modifying the other one of the first and the second multi-segment displays.

In another example aspect, the other one of the first and the second multi-segment displays is modified based on the first character. In another example aspect, the other one of the first and the second multi-segment displays is modified to display a suggested character, the suggested character associated with the first character. In another example aspect, the method further includes receiving an input to display a second character equivalent to the suggested character in association with the other one of the first and the second multi-segment displays.
In another example aspect, the suggested character is associated with the first character based on data previously provided by a user.

In another example aspect, the one of the first and the second multi-segment displays is the first multi-segment display and the other one of the first and the second multi-segment displays is the second multi-segment display; the first character displayed is a numeral '3'; and the second multi-segment display is modified by highlighting segments to display a numeral '0'.

In another example aspect, the one of the first and the second multi-segment displays is the first multi-segment display and the other one of the first and the second multi-segment displays is the second multi-segment display; the first character displayed is a numeral '1'; and the second multi-segment display is modified by highlighting segments to display a numeral '5'.

In another example aspect, the one of the first and the second multi-segment displays is the second multi-segment display and the other one of the first and the second multi-segment displays is the first multi-segment display; and the first multi-segment display is modified by displaying a numeral '0' or modified by no longer displaying the first multi-segment display.

An example electronic device is provided and it includes a processor, a touch-sensitive input mechanism and memory. The memory stores computer executable instructions for: displaying a multi-segment display; detecting a touch gesture overlaid the multi-segment display; activating segments of the multi-segment display that correspond to the touch gesture; and displaying the character that corresponds to the activated segments.

### BRIEF DESCRIPTION OF THE DRAWINGS

Embodiments will now be described by way of example only with reference to the appended drawings wherein:

Figs. 1(a), 1(b), 1(c) and 1(d) show different stages of a graphical user interface (GUI) for using touch gestures to display a time.

Fig. 2 is a diagram of an example of a wireless communication system.

Fig. 3 is a diagram of an example of a mobile device.

Fig. 4 is a plan view of an example of a mobile device.

Fig. 5 is a plan view of another example of a mobile device.

Fig. 6 is a plan view of example gestures on the mobile device of Fig. 5.

Fig. 7 is a diagram of an example configuration of a gesture input application.

Figs. 8(a) and 8(b) is an illustration of different example seven-segment displays.

Fig. 9 is an illustration of an example nine-segment display.

Fig. 10 is an illustration of an example sixteen-segment display.

Fig. 11 is a flow diagram of example computer executable instructions for displaying a character using a touch gesture overlaid a multi-segment display.

Fig. 12 is a flow diagram of example computer executable instructions for activating segments based on detecting the touch gesture has touched one or more segments in a multi-segment display.

Fig. 13 is a flow diagram of example computer executable instructions that are similar to those Fig. 12, but for numbers.

Fig. 14 is a flow diagram of example computer executable instructions for activating segments based on point detection.

Fig. 15 is a flow diagram of example computer executable instructions that are similar to those Fig. 14, but for numbers.

Figs. 16(a), 16(b), 16(c), 16(d), 16(e), 16(f), 16(g) and 16(h) show different stages of a GUI for displaying the number '2' using a multi-segment display.

Figs. 17(a), 17(b), 17(c), 17(d), 17(e), 17(f), and 17(g) show different stages of a GUI for displaying the number '3' using a multi-segment display.

Fig. 18 is a flow diagram of example computer executable instructions for providing feedback about which segments in a multi-segment display have been activated.

Fig. 19 is a flow diagram of other example computer executable instructions for providing feedback about which segments in a multi-segment display have been activated.

Fig. 20(a) is an illustration of a GUI showing multi-segment displays for the month, day and year as well as inputted touch gestures.

Fig. 20(b) is an illustration of the GUI in Fig. 20(a) the resulting date being displayed.

Figs. 21(a) and 21(b) illustrate different touch gestures over a multi-segment display that are used to show the numeral '2'.

Fig. 22 is a diagram of example components of a rules database for mapping touch gestures to numbers for a seven-segment display.

Figs. 23(a), 23(b) and 23(c) show different stages of a GUI for displaying the time '1:30'.

Figs. 24(a), 24(b) and 24(c) show different stages of a GUI for displaying the time '1:35'.

Figs. 25(a), 25(b) and 25(c) show different stages of a GUI for displaying the time '1:15'.

Figs. 26(a), 26(b) and 26(c) show different stages of a GUI for displaying the time '11:00'.

Figs. 27(a), 27(b) and 27(c) show different stages of another GUI for displaying the time '1:15'.

Figs. 28(a), 28(b) and 28(c) show different stages of another GUI for displaying the time '1:35'.

Figs. 29(a), 29(b), 29(c) and 29(d) show different stages of yet another GUI for displaying the time '1:15'.

Fig. 30 is a flow diagram of example computer executable instructions for displaying the minute value '30'.

Fig. 31 is a flow diagram of example computer executable instructions for displaying the minute value '15'.

Fig. 32 is a flow diagram of example computer executable instructions for displaying the minute value '00'.

Fig. 33(a) illustrates a GUI of two multi-segment displays that is receiving a touch gesture for the number '8'.

Figs. 33(b) illustrates the GUI of Fig. 33(a) displaying the number'8'.

Figs. 33(c) illustrates the GUI of Fig. 33(a) displaying the numbers '08'.

Fig. 34 is a flow diagram of example computer executable instructions for automatically displaying a null value or a '0' value preceding another inputted value.

Fig. 35 shows different stages of a GUI for modifying a displayed value '2' to a new value '3'.

Fig. 36 shows different stages of another GUI for modifying a displayed value '2' to a new value '3'.

Fig. 37 shows different stages of yet another GUI for modifying a displayed value '2' to a new value '3'.

Fig. 38 is a flow diagram of example computer executable instructions for modifying a displayed character and saving a mapping between a touch gesture and a modified character.

Fig. 39 is a flow diagram of example computer executable instructions for applying the mapping of Fig. 38 to display the modified character.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practised without these specific details. In other instances, well-known methods, procedures and components have not been described in detail so as not to obscure the example embodiments described herein. Also, the description is not to be considered as limiting the scope of the example embodiments described herein.

Various software applications display numbers and letters on electronic devices. Numbers and alphabets are herein generally referred to as "characters". Examples of such software applications include an alarm clock, a scheduling application for a calendar, an email application, a calculator, an address book, and a phone book. For electronic devices that have touch screens, a user may use a virtual keyboard that is displayed on the touch screen to enter in numbers and letters. In some situations it is not preferable to use a virtual keyboard because the virtual keyboard uses a significant amount of space on the touch screen.

To select a time or date, some applications use a rolling picker interface that allows a user to scroll between a series of different numbers. Such interfaces are used on electronic devices with touch screens. Rolling picker interfaces can sometimes be frustrating to use.

For example, a user may not necessarily think of a particular time in relation to the current time that is displayed on the rolling time picker. In other words, it is cognitively demanding to try to get to 11:45 PM when the rolling time picker is currently displaying 8:30 PM. More often than otherwise, a user may think of a meeting time in absolute value rather than in relative terms. A rolling time picker is better suited for selecting a relative time, and typically does not as easily facilitate selecting an absolute time value.

Rolling pickers for touch screens may also suffer from inaccuracy. A user may inadvertently allow the rolling interface to roll pass the desired number, and consequently, the user will need to provide another input to the rolling picker interface to arrive at the desired number. This can be time-consuming and inconvenient to the user.

It is also recognized that rolling picker interfaces display the preceding and proceeding values on a virtual wheel. As a result, the rolling picker interface typically consumes a significant amount of real estate on the display of the touch screen.

The proposed systems and methods described herein allows a user to trace their finger on top of a multi-segment display. Segments of the multi-segment display are activated or highlighted when the finger touches them. This allows loose tracing gestures to be used. When a combination of segments are touched, a character is displayed. In example embodiments, different combinations of segments can be touched to invoke the display of the same character.

The proposed systems and methods for entering in characters addresses the issues associated with rolling picker interfaces. In an example embodiment, a guide in the form of a multi-segment display is combined with handwritten character recognition algorithms. In another example embodiment, segments of a multi-segment display are activated when touched by the user to provide immediate feedback. In another example embodiment, character recognition can also make use of heuristics to decipher or predict, or both, what is being entered through a touch gesture.

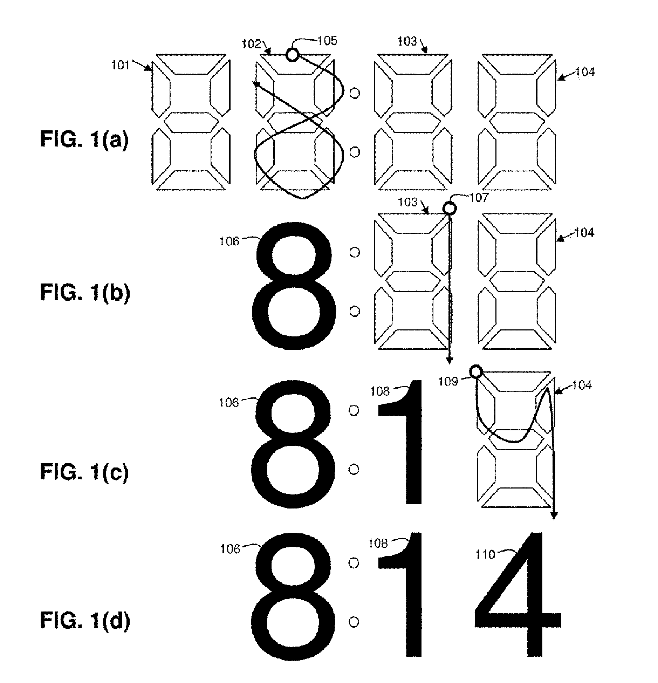

Figs. 1(a) to 1(d) show various example states of a time display which is sequentially modified using touch gestures.

Turning to Fig. 1(a), four multi-segment displays 101, 102, 103, 104 are shown in a neutral state on a touch-sensitive display of an electronic device. The terms "touch-sensitive display" and "touch screen" are used herein used interchangeably. The term "neutral state" refers to the segments being displayed, but without being activated or highlighted. In an example embodiment, the neutral state means displaying a ghosted or faint image of the multi-segment display. In another example embodiment, a neutral state means displaying an outline of the multi-segment display. For ease of viewing and reproduction of this document, the neutral state is herein illustrated in the figures as an outline of the multi-segment display.

In the example shown in Fig. 1(a), the format of the multi-segment displays 101, 102, 103 and 104 is for time (e.g. HH:MM). A touch gesture 105 is shown being traced over the multi-segment display 102. The touch gesture 105 is illustrated by a circle, which represents the beginning of the touch gesture, and is followed by a line, which represents the path of the touch gesture. The touch gesture 105 is an input to display the numerical character '8'.

Turning to Fig. 1(b), as a result of the touch gesture 105, a computer character '8' is shown in the place of the display 102. The display 101 is removed. The other displays 103 and 104 are still displayed in a neutral state. Another touch gesture 107 is received overlaid the display 103. The touch gesture 107 travels downwards in a substantially straight line and it represents a numerical '1'. The touch gesture 107 crates a path that crosses over certain segments of the display 103 which, when combined, represent the number'1'.

Turning to Fig. 1(c), the numerical character '1' 108 is displayed in place of the display 103. The display 104 is still displayed in a neutral state. Another touch gesture 109 is detected overlaid the display 104. The touch gesture 109 forms a number '4'. For example, the path of the touch gesture 109 crosses over certain segments of the display 104, which, when combined, represent the numerical character '4'.

Turning to Fig. 1(d), as a result of touch gesture 109, the numerical character '4' 110 is displayed in place of the display 104. Cumulatively, the touch gestures are used to display the time '8:14'.

Examples of applicable mobile electronic devices may include, without limitation, cellular phones, smart-phones, tablet computers, wireless organizers, personal digital assistants, computers, laptops, handheld wireless communication devices, wirelessly enabled notebook computers, portable gaming devices, and the like. Such devices will hereinafter be commonly referred to as "mobile devices" 100 for the sake of clarity. It will however be appreciated that the principles described herein are also suitable to other electronic devices, e.g. "non-mobile" devices. For example, the principles herein are equally applicable to personal computers (PCs), tabletop computing devices, wall-mounted screens such as kiosks, or any other computing device.

The mobile device 100 may be a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless Internet appliance, or a data communication device (with or without telephony capabilities).

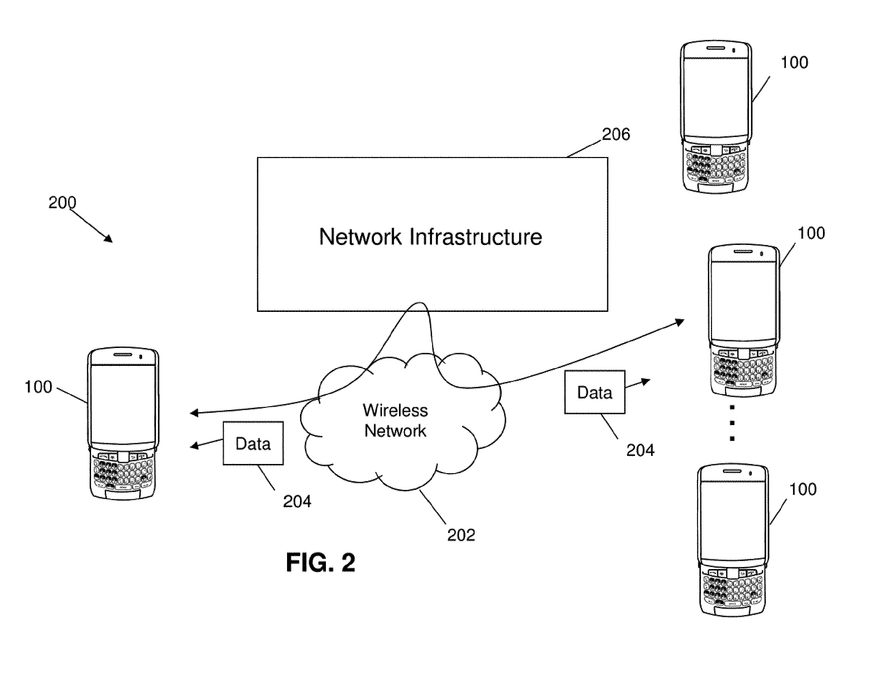

Referring to Fig. 2, an example communication system 200 is shown. The communication system 200, in this example, enables, at least in part, mobile devices 100 to communicate with each other via a wireless network 202. For example, as shown, data 204 may be exchanged between various mobile devices 100. Data 204 that is sent from one mobile device 100 to another mobile device 100 may be transmitted according to a particular messaging or communication medium, protocol, or other mechanism. For example, as shown in Fig. 2, data 204 may be sent over the wireless network 202 via a component of a network infrastructure 206. The network infrastructure 206 can include various systems that may be used by the mobile devices 100 to exchange data 204. For example, a peer-to-peer (P2P) system, a short message service centre (SMSC), an email system (e.g. web-based, enterprise based, or otherwise), a web system (e.g. hosting a website or web service), a host system (e.g. enterprise server), and social networking system may be provided by or within or be otherwise supported or facilitated by the network infrastructure 206. The mobile devices 100 may therefore send data to or receive data from other mobile devices 100 via one or more particular systems with which the mobile devices 100 are communicable via the wireless network 202 and network infrastructure 206.

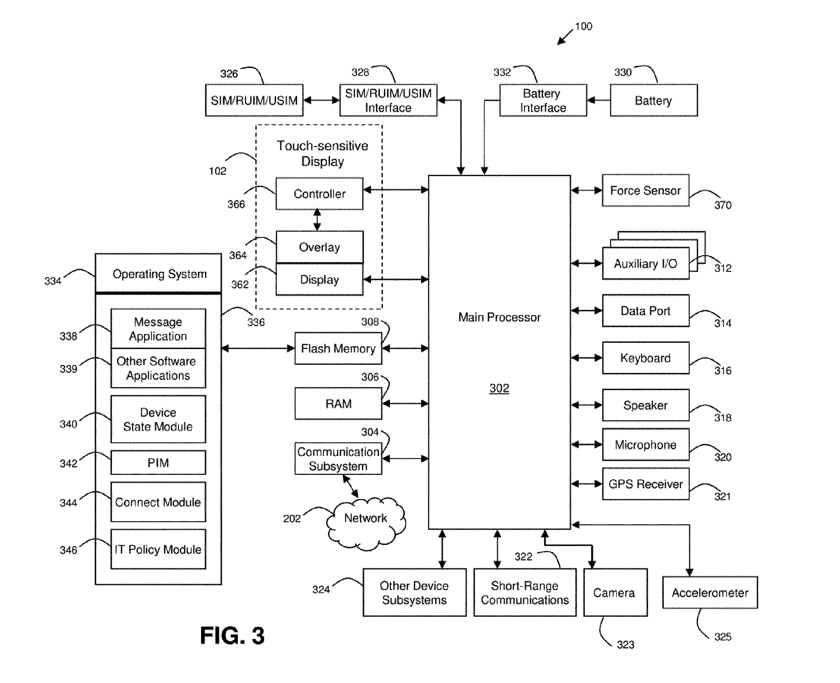

To aid the reader in understanding an example configuration of a mobile device 100, reference will be made to Fig. 3, which illustrates a diagram of an example of a mobile device 100. The mobile device 100 includes a number of components such as a main processor 302 that controls the overall operation of the mobile device 100. Communication functions, including data and voice communications, are performed through a communication subsystem 304. The communication subsystem 304 receives messages from and sends messages to a wireless network 202. In this example of the mobile device 100, the communication subsystem 304 is configured in accordance with the Global System for Mobile Communication (GSM) and General Packet Radio Services (GPRS) standards, which is used worldwide. Other communication configurations that are equally applicable are the 3G and 4G networks such as Enhanced Data-rates for Global Evolution (EDGE), Universal Mobile Telecommunications System (UMTS) and High-Speed Downlink Packet Access (HSDPA), Long Term Evolution (LTE), Worldwide Interoperability for Microwave Access (Wi-Max), etc. New standards are still being defined, but it is believed that they will have similarities to the network behaviour described herein, and it will also be understood by persons skilled in the art that the example described herein are intended to use any other suitable standards that are developed in the future. The wireless link connecting the communication subsystem 304 with the wireless network 202 represents one or more different Radio Frequency (RF) channels, operating according to defined protocols specified for GSM/GPRS communications.

The main processor 302 also interacts with additional subsystems such as a Random Access Memory (RAM) 306, a flash memory 308, a touch-sensitive display 102, an auxiliary input/output (I/O) subsystem 312, a data port 314, a keyboard 316, a speaker 318, a microphone 320, a GPS receiver 321, short-range communications 322, a camera 323, a accelerometer 325 and other device subsystems 324. Some of the subsystems of the mobile device 100 perform communication-related functions, whereas other subsystems may provide "resident" or on-device functions. By way of example, the display 102 and the keyboard 316 may be used for both communication-related functions, such as entering a text message for transmission over the network 202, and device-resident functions such as a calculator or task list. In one example, the mobile device 100 can include a non touch-sensitive display in place of, or in addition to the touch-sensitive display 102.

The mobile device 100 can send and receive communication signals over the wireless network 202 after required network registration or activation procedures have been completed. Network access is associated with a subscriber or user of the mobile device 100. To identify a subscriber, the mobile device 100 may use a subscriber module component or "smart card" 326, such as a Subscriber Identity Module (SIM), a Removable User Identity Module (RUIM) and a Universal Subscriber Identity Module (USIM). In the example shown, a SIM/RUIM/USIM 326 is to be inserted into a SIM/RUIM/USIM interface 328 in order to communicate with a network. Once the SIM/RUIM/USIM 326 is inserted into the SIM/RUIM/USIM interface 328, it is coupled to the main processor 302.

The mobile device 100 is typically a battery-powered device and includes a battery interface 332 for receiving one or more rechargeable batteries 330. In at least some examples, the battery 330 can be a smart battery with an embedded microprocessor. The battery interface 332 is coupled to a regulator (not shown), which assists the battery 330 in providing power to the mobile device 100. Although current technology makes use of a battery, future technologies such as micro fuel cells may provide the power to the mobile device 100.

The mobile device 100 also includes an operating system 334 and software components 336 to 346 which are described in more detail below. The operating system 334 and the software components 336 to 346 that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 346, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 100 during its manufacture. Software applications may include a message application 338, a device state module 340, a Personal Information Manager (PIM) 342, a connect module 344 and an IT policy module 346. A message application 338 can be any suitable software program that allows a user of the mobile device 100 to send and receive electronic messages, wherein messages are typically stored in the flash memory 308 of the mobile device 100. A device state module 340 provides persistence, i.e. the device state module 340 ensures that important device data is stored in persistent memory, such as the flash memory 308, so that the data is not lost when the mobile device 100 is turned off or loses power. A PIM 342 includes functionality for organizing and managing data items of interest to the user, such as, but not limited to, e-mail, contacts, calendar events, and voice mails, and may interact with the wireless network 202. A connect module 344 implements the communication protocols that are required for the mobile device 100 to communicate with the wireless infrastructure and any host system, such as an enterprise system, that the mobile device 100 is authorized to interface with. An IT policy module 346 receives IT policy data that encodes the IT policy, and may be responsible for organizing and securing rules such as the "Set Maximum Password Attempts" IT policy.

Other types of software applications or components 339 can also be installed on the mobile device 100. These software applications 339 can be pre-installed applications (i.e. other than message application 338) or third party applications, which are added after the manufacture of the mobile device 100. Examples of third party applications include games, calculators, utilities, etc.

The additional applications 339 can be loaded onto the mobile device 100 through at least one of the wireless network 202, the auxiliary I/O subsystem 312, the data port 314, the short-range communications subsystem 322, or any other suitable device subsystem 324.

The data port 314 can be any suitable port that enables data communication between the mobile device 100 and another computing device. The data port 314 can be a serial or a parallel port. In some instances, the data port 314 can be a USB port that includes data lines for data transfer and a supply line that can provide a charging current to charge the battery 330 of the mobile device 100.

For voice communications, received signals are output to the speaker 318, and signals for transmission are generated by the microphone 320. Although voice or audio signal output is accomplished primarily through the speaker 318, the display 102 can also be used to provide additional information such as the identity of a calling party, duration of a voice call, or other voice call related information.

The touch-sensitive display 102 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. In the presently described example, the touch-sensitive display 102 is a capacitive touch-sensitive display which includes a capacitive touch-sensitive overlay 364. The overlay 364 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The display 362 of the touch-sensitive display 102 may include a display area in which information may be displayed, and a non-display area extending around the periphery of the display area. Information is not displayed in the non-display area, which is utilized to accommodate, for example, electronic traces or electrical connections, adhesives or other sealants, and/or protective coatings around the edges of the display area.

One or more touches, also known as touch contacts or touch events, may be detected by the touch-sensitive display 102. The processor 302 may determine attributes of the touch, including a location of a touch. Touch location data may include an area of contact or a single point of contact, such as a point at or near a center of the area of contact, known as the centroid. A signal is provided to the controller 366 in response to detection of a touch. A touch may be detected from any suitable object, such as a finger, thumb, appendage, or other items, for example, a stylus, pen, or other pointer, depending on the nature of the touch-sensitive display 102. The location of the touch moves as the detected object moves during a touch. The controller 366 and/or the processor 302 may detect a touch by any suitable contact member on the touch-sensitive display 102. Similarly, multiple simultaneous touches, are detected.

One or more gestures are also detected by the touch-sensitive display 102. A gesture is a particular type of touch on a touch-sensitive display 102 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture.

An example of a gesture is a swipe (also known as a flick). A swipe has a single direction. The touch-sensitive overlay 364 may evaluate swipes with respect to the origin point at which contact is initially made with the touch-sensitive overlay 364 and the end point at which contact with the touch-sensitive overlay 364 ends rather than using each of location or point of contact over the duration of the gesture to resolve a direction.

Examples of swipes include a horizontal swipe, a vertical swipe, and a diagonal swipe. A horizontal swipe typically comprises an origin point towards the left or right side of the touch-sensitive overlay 364 to initialize the gesture, a horizontal movement of the detected object from the origin point to an end point towards the right or left side of the touch-sensitive overlay 364 while maintaining continuous contact with the touch-sensitive overlay 364, and a breaking of contact with the touch-sensitive overlay 364. Similarly, a vertical swipe typically comprises an origin point towards the top or bottom of the touch-sensitive overlay 364 to initialize the gesture, a horizontal movement of the detected object from the origin point to an end point towards the bottom or top of the touch-sensitive overlay 364 while maintaining continuous contact with the touch-sensitive overlay 364, and a breaking of contact with the touch-sensitive overlay 364.

Swipes can be of various lengths, can be initiated in various places on the touch-sensitive overlay 364, and need not span the full dimension of the touch-sensitive overlay 364. In addition, breaking contact of a swipe can be gradual in that contact with the touch-sensitive overlay 364 is gradually reduced while the swipe is still underway.

Meta-navigation gestures may also be detected by the touch-sensitive overlay 364. A meta-navigation gesture is a gesture that has an origin point that is outside the display area of the touch-sensitive overlay 364 and that moves to a position on the display area of the touch-sensitive display. Other attributes of the gesture may be detected and be utilized to detect the meta-navigation gesture. Meta-navigation gestures may also include multi-touch gestures in which gestures are simultaneous or overlap in time and at least one of the touches has an origin point that is outside the display area and moves to a position on the display area of the touch-sensitive overlay 364. Thus, two fingers may be utilized for meta-navigation gestures. Further, multi-touch meta-navigation gestures may be distinguished from single touch meta-navigation gestures and may provide additional or further functionality.

In some examples, an optional force sensor 370 or force sensors is disposed in any suitable location, for example, between the touch-sensitive display 102 and a back of the mobile device 100 to detect a force imparted by a touch on the touch-sensitive display 102. The force sensor 370 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

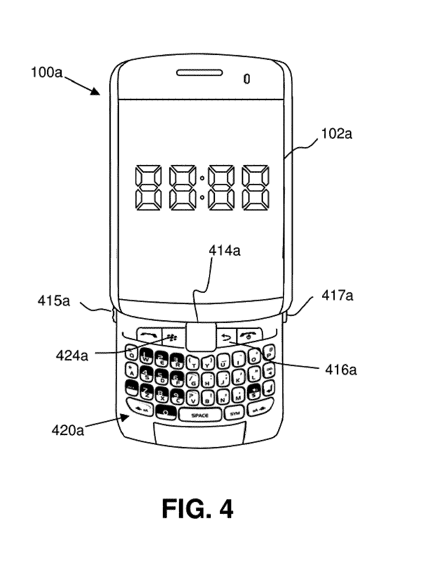

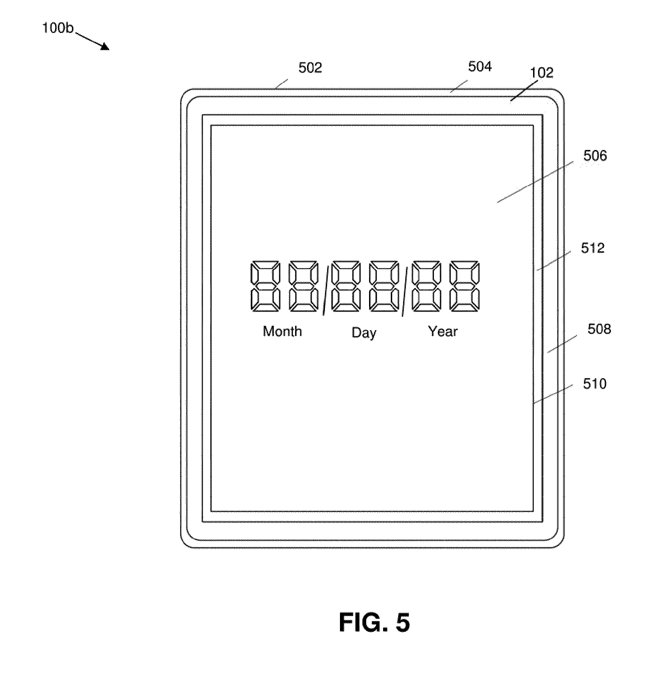

Referring to Figs. 4 and 5, one example of a mobile device 100a is shown in Fig. 4 and another example of a mobile device 100b is shown in Fig. 5. It will be appreciated that the numeral "100" will hereinafter refer to any mobile device 100, including the examples 100a and 100b, those examples enumerated above or otherwise. It will also be appreciated that a similar numbering convention may be used for other general features common between all figures.

The mobile device 100a shown in Fig. 4 includes a touch-sensitive display area 102a and a cursor or positioning device, which in this example is in the form of a trackpad 414a. The touch-sensitive display area 102a can display multi-segment displays, such as for selecting time. In this example, the touch-sensitive display area 102a spans the entire touch-sensitive display. The trackpad 414a permits multi-directional positioning of a selection indicator or cursor that can be displayed on the touch-sensitive display area 102a such that the selection cursor can be moved in an upward, downward, left and right direction, and if desired and/or permitted, in any diagonal direction. A selection cursor may include a box, alteration of an icon or any combination of features that enable the user to identify the currently chosen icon or item. The trackpad 414a in this example is situated on the front face of a housing for mobile device 100a to enable a user to manoeuvre the trackpad 414a while holding the mobile device 100a in one hand. The trackpad 414a may serve as another input member (in addition to a directional or positioning member) to provide selection inputs to a processor of the mobile device and can preferably be pressed in a direction towards the housing of the mobile device 100a to provide such a selection input. It will be appreciated that the trackpad 414a is only one example of a suitable positioning device. For example, a trackball, touch-sensitive display, OLED, or other input mechanism may equally apply.

The mobile device 100a in Fig. 4 also includes a programmable convenience button 415a to activate a selection application such as, for example, a calendar or calculator. Further, mobile device 100a also includes an escape or cancel button 416a, a camera button 417a, a menu or option button 424a and a keyboard 420a. The camera button 417a is able to activate photo and video capturing functions, e.g. when pressed in a direction towards the housing. The menu or option button 424a can be used to load a menu or list of options on the display 102a when pressed. In this example, the escape or cancel button 416a, the menu option button 424a, and a keyboard 420a are disposed on the front face of the mobile device housing, while the convenience button 415a and camera button 417a are disposed at the side of the housing. This button placement enables a user to operate these buttons while holding the mobile device 100a in one hand. The keyboard 420a is, in this example, a standard QWERTY keyboard, however, it will be appreciated that reduced QWERTY or virtual keyboards (e.g. as provided by a touch-sensitive display) may equally apply.

It will be appreciated that for the mobile device 100, a wide range of one or more positioning or cursor/view positioning mechanisms such as a touch/track pad, a positioning wheel, a joystick button, a mouse, a touch-sensitive display, a set of arrow keys, a tablet, an accelerometer (for sensing orientation and/or movements of the mobile device 100 etc.), OLED, or other whether presently known or unknown may be employed. Similarly, any variation of keyboard 420a may be used. It will also be appreciated that the mobile devices 100 shown in Figs. 4 and 5 are for illustrative purposes only and various other mobile devices 100 are equally applicable to the following examples. Other buttons may also be disposed on the mobile device housing such as colour coded "Answer" and "Ignore" buttons to be used in telephonic communications.

A front view of an example of the mobile device 100b is shown in Fig. 5. The mobile device 100b includes a housing 502 that encloses components such as shown in Fig. 3. The housing 502 may include a back, sidewalls, and a front 504 that frames the touch-sensitive display 102. The example mobile device 100b shown in FIG. 5 can represent a portable tablet computer or other handheld or otherwise portable device.

In the example of Fig. 5, the touch-sensitive display 102 is generally centered in the housing 502 such that a display area 506 of the touch-sensitive overlay 364 is generally centered with respect to the front 504 of the housing 502. The non-display area 508 of the touch-sensitive overlay 364 extends around the display area 506. In the presently described example, the width of the non-display area is 4 mm. In one example, the touch-sensitive display area 122 and the touch-sensitive non-display area 124 of Fig. 1 can be implemented as a display area 506 of the touch-sensitive overlay 364 and a non-display area 508 of the touch-sensitive overlay 364, respectively. The display area 506 is also configurable to display multi-segment displays, such as for selecting a date.

For the purpose of the present example, the touch-sensitive overlay 364 extends to cover the display area 506 and the non-display area 508. Touches on the display area 506 may be detected and, for example, may be associated with displayed selectable features. Touches on the non-display area 508 may be detected, for example, to detect a meta-navigation gesture. Alternatively, meta-navigation gestures may be determined by both the non-display area 508 and the display area 506. The density of touch sensors may differ from the display area 506 to the non-display area 508. For example, the density of nodes in a mutual capacitive touch-sensitive display, or density of locations at which electrodes of one layer cross over electrodes of another layer, may differ between the display area 506 and the non-display area 508.

Gestures received on the touch-sensitive display 102 may be analyzed based on the attributes to discriminate between meta-navigation gestures and other touches, or non-meta navigation gestures. Meta-navigation gestures may be identified when the gesture crosses over a boundary near a periphery of the display 362, such as a boundary 510 between the display area 506 and the non-display area 508. In the example of Fig. 5, the origin point of a meta-navigation gesture may be determined utilizing the area of the touch-sensitive overlay 364 that covers the non-display area 508.

A buffer region 512 or band that extends around the boundary 510 between the display area 506 and the non-display area 508 may be utilized such that a meta-navigation gesture is identified when a touch has an origin point outside the boundary 510 and the buffer region 512 and crosses through the buffer region 512 and over the boundary 510 to a point inside the boundary 510. Although illustrated in FIG. 5, the buffer region 512 may not be visible. Instead, the buffer region 512 may be a region around the boundary 510 that extends a width that is equivalent to a predetermined number of pixels, for example. Alternatively, the boundary 510 may extend a predetermined number of touch sensors or may extend a predetermined distance from the display area 506. The boundary 510 may be a touch-sensitive region or may be a region in which touches are not detected.

Gestures that have an origin point in the buffer region 512, for example, may be identified as non-meta navigation gestures. Optionally, data from such gestures may be utilized by an application as a non-meta navigation gesture. Alternatively, data from such gestures may be discarded such that touches that have an origin point on the buffer region 512 are not utilized as input at the mobile device 100.

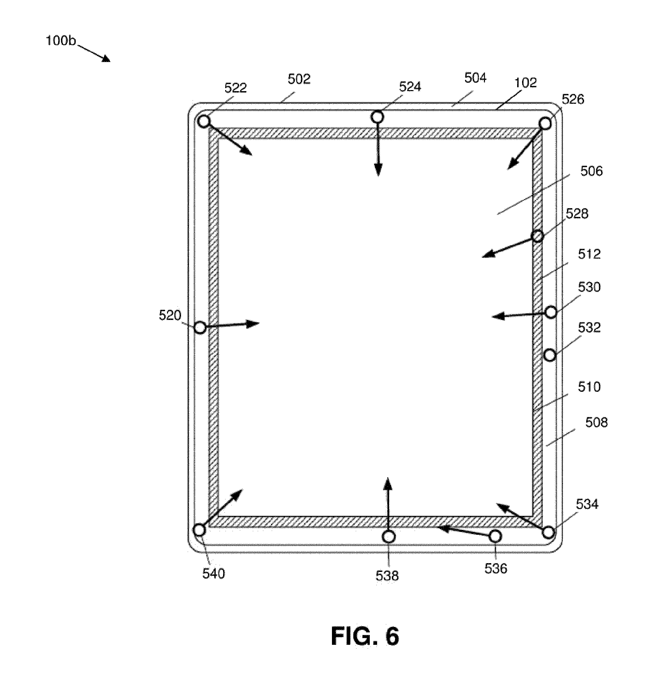

Fig. 6 illustrates examples of touches on the touch-sensitive display 102. The buffer region 512 is illustrated in Fig. 6 by hash markings for the purpose of explanation. As indicated, the buffer region 512 may not be visible to the user. For the purpose of explanation, touches are illustrated by circles at their points of origin. Arrows extending from the circles illustrate the paths of the touches that are gestures.

The touch 538 begins at the origin point outside the boundary 510 and outside the buffer region 512. The path of the touch 538 crosses the buffer region 512 and the boundary 510 and is therefore identified as a meta-navigation gesture. Similarly, the touches 520, 530, 524, 522, 526, 540, 534 each have origin points outside the boundary 510 and the buffer region 512 and their paths cross the buffer region 512 and the boundary 510. Each of the touches 520, 530, 524, 522, 526, 540, 534 is therefore identified as a meta-navigation gesture. The touch 528, however, has an origin point that falls within the buffer region 512 and the touch 528 is therefore not identified as a meta-navigation gesture. The touch 536 begins at an origin point outside the boundary 510 and the buffer region 512. The path of the touch 536, however, does not cross the boundary 510 and is therefore not identified as a meta-navigation gesture. The touch 532 also has an origin point outside the boundary 510 and the buffer region 512 but is not a gesture and therefore does not cross the boundary 510 and is not identified as a meta-navigation gesture.

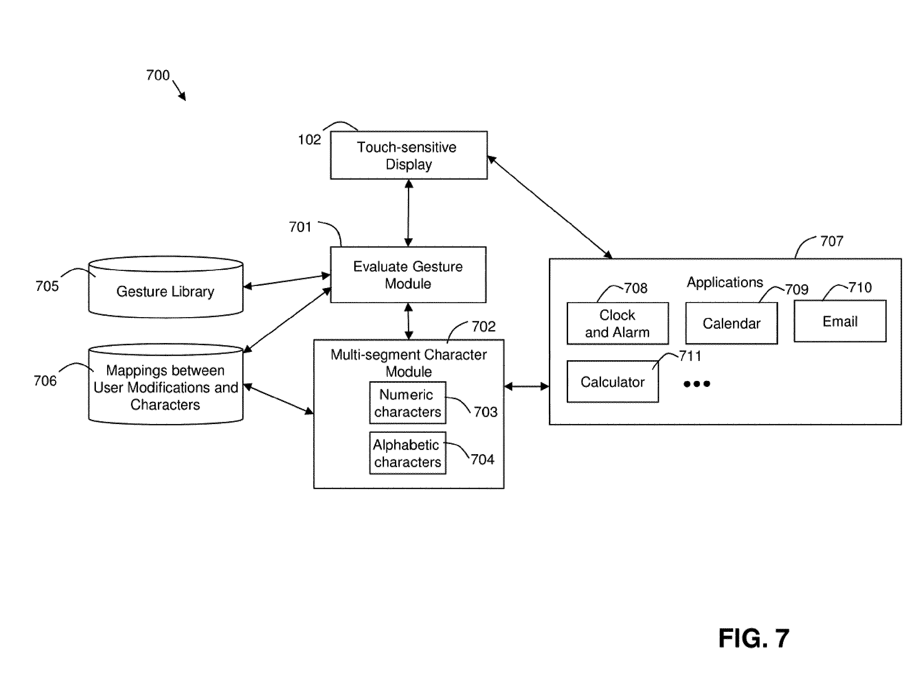

Referring to Fig. 7, an example of a configuration for gesture input application 700 is provided. The gesture input application 700 can be one of the other software applications 339 of Fig. 3 that can be loaded onto the mobile device 100. The gesture input application can receive request details of activity occurring in, or receive inputs from, a component that can receive gestures, such as a touch-sensitive display 102 for example.

An evaluate gesture module 701 is in communication with the touch-sensitive display 102. The evaluate gesture module 701 is also in communication with a multi-segment character module 702. The multi-segment character module 702 includes numerical characters 703 and alphabetic characters 704. Although Arabic numerals and the English alphabet is used as common examples, other characters specific to other languages or fields (e.g. music, science, math, etc.) can also benefit from the principles described herein. In other words, other characters can be used. The evaluate gesture module 701 evaluates touch gestures detected by the touch-sensitive display 102. The module 701 evaluates text gestures in the context of a multi-segment display. It should be appreciated that the touch-sensitive display 102 displays a multi-segment display, which provides the context of a touch gesture. The module 701 evaluates touch gestures based on a gesture library 705 as well as a mappings library 706 that includes mappings between user modifications and characters.

The multi-segment character module 702 can display numbers or alphabets, or other symbols which can be displayed on a multi-segment display. One or more applications 707 will use the multi-segment character module 702 to receive inputs to select numbers or alphabets, or characters in general. Examples of such applications that may use the multi-segment character module 702, include a clock and alarm application 708, a calendar application 709, an email application 710, and a calculator application 711. For example, a clock application will allow a user to use touch gestures over a multi-segment display to select the time. In another example, a calendar application will allow a user to use touch gestures over multi-segment display to input a date. In another example, a calculator application will allow a user to use touch gestures over multi-segment displays to enter in numbers.

It will be appreciated that any module, subsystem component exemplified herein that executes instructions or operations may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data, except transitory propagating signals per se. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 100 or accessible or connectable thereto. Any application or module herein described may be implemented using computer readable/executable instructions or operations that may be stored or otherwise held by such computer readable media.

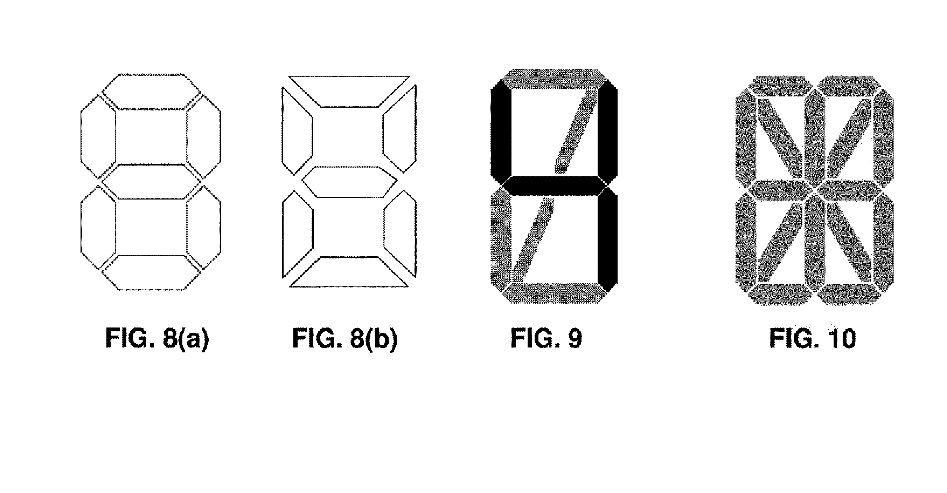

Multi-segment displays herein include, for example, seven-segment displays, nine-segment displays, fourteen-segment displays and sixteen-segment displays, for example. Examples of seven-segment displays are shown in Fig. 8(a) and Fig. 8(b). An example of a nine-segment display is shown in Fig. 9. The display in Fig. 9 shows some of the segments being highlighted to display the number '4'. An example of a sixteen-segment display is shown in Fig.10. The sixteen-segment display can be used to show different characters, including alphabets and numbers.

Although the examples shown in the figures illustrate seven-segment displays, it can be appreciated that other multi-segment displays may be used to suit the application.

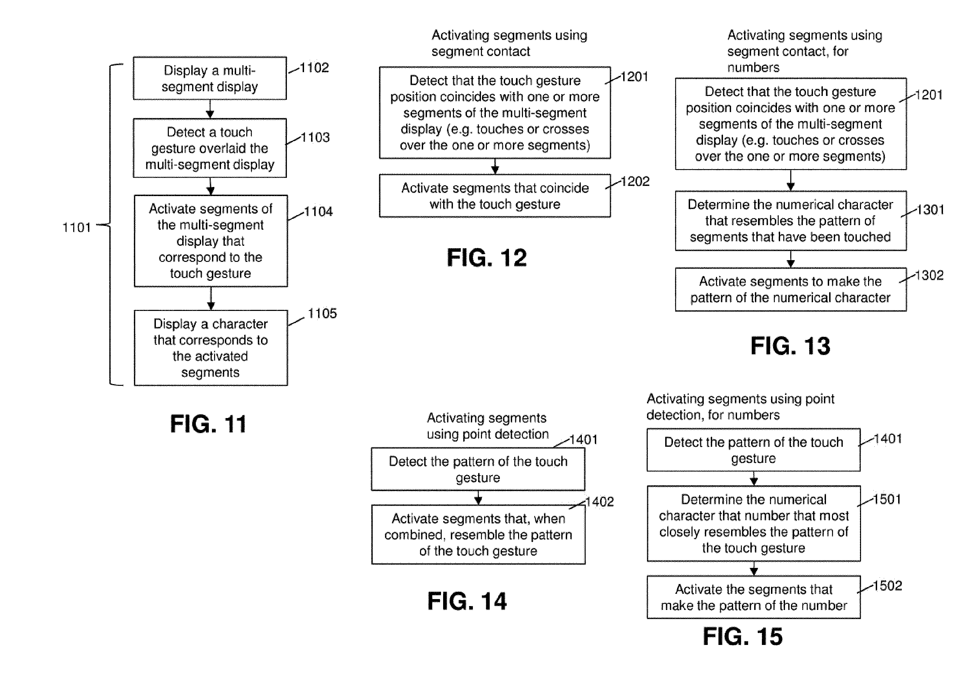

Turning to Fig. 11, an example set of computer executable instructions 1101 is provided for displaying a character using touch gestures. At 1102, the mobile device 100 displays a multi-segment display. At 1103, the mobile device detects a touch gesture that is overlaid the multi-segment display. At 1104, the mobile device activates segments of the multi-segment display which correspond to the touch gesture. At 1105, the mobile device displays a character that corresponds to the activated segments of the multi-segment display.

Turning to Fig. 12, an example set of computer executable instructions is provided for activating segments based on detecting that the touch gesture has contacted or has overlapped segments of the multi-segment display. The instructions of Fig. 12 are an example embodiment for implementing the operation 1104. At 1201, the mobile device 100 detects that the touch gesture position coincides with one or more segments of the multi-segment display. For example, it is detected that the touch gesture position touches or crosses over one or more segments. At 1202, the mobile device activates segments that coincide with the touch gesture.

Turning to Fig. 13, example computer executable instructions are provided, which are similar to the instructions of Fig. 12, but are specific for numerical characters. After operation 1201, at 1301, the mobile device 100 determines the numerical character that resembles the pattern of segments that have been touched. The determination can be made, for example, using the libraries 705 and 706. At 1302, the mobile device activates segments to make the pattern of the numerical character. Using this approach, the exact segments of a number do not need to be "touched" by the touch gesture in order. Instead, based on the pattern of segments that have been touched, an estimation or approximation can be made to identify the intended numerical character.

Turning to Fig. 14, an example set of computer executable instructions is provided for activating segments using point detection. The point detection approach does not need the touch gesture to coincide with or touch the segments of the multi-segment display in order to activate a segment. The instructions of Fig. 14 can be used, for example, to implement the operation 1104. In particular, at 1401 the mobile device 100 detects the pattern of the touch gesture using point detection. Point detection refers to determining the order in the trace of points so as to form a shape or pattern. Known approaches for point detection or pattern recognition can be applied to the principles described herein. In other words, based on the gesture and the application of point detection, a shape or pattern is obtained. At 1402, the device activates segments on the multi-segment display that, when combined, the activated segments shows a pattern that corresponds to or closely resembles the obtained shape or pattern.

Turning to Fig. 15, an example set of computer executable instructions is provided which are similar to those in Fig. 14. However, the instructions of Fig. 15 are specific to numerical characters. Operation 1401 is performed by the mobile device 100. At 1501, the mobile device determines the numerical character that most closely resembles the obtained shape or pattern of the touch gesture. The library of numerical characters can be called upon to determine the appropriate numerical character. At 1502, the mobile device activates the segments on the multi-segment display that, when combined, make the pattern of the numerical character.

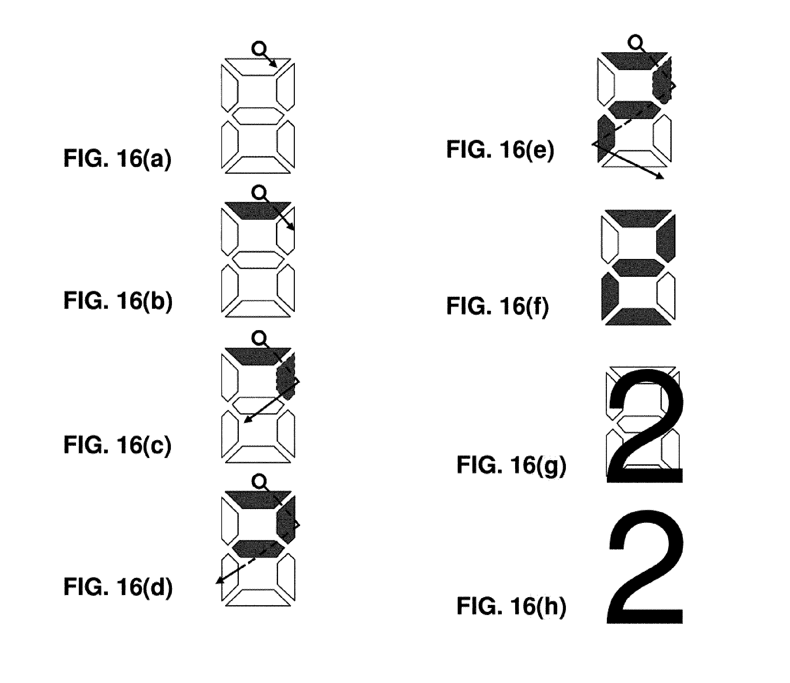

Turning to Figs. 16(a) to 16(h), example stages of a touch gesture are shown for displaying a character using a multi-segment display. Immediate feedback is provided as the touch gesture moves over a segment by highlighting the segment. Fig. 16(a) shows a seven-segment display in a neutral mode. Figures 16(b), 16(c), 16(d) and 16(e) show that, as a touch gesture moves over a certain segment, that segment is darkened or highlighted. The sequence of the segments being highlighted corresponds to the touch gesture. Fig.16(f) shows that, when the touch gesture is complete, the combination of highlighted segments show the numerical character '2'. In an example embodiment, as per Fig. 16(g), the seven-segment display is returned to a neutral mode and a numerical character '2', shown in a different font, is overlaid the seven-segment display. In another example embodiment, as per Fig. 16(h), the seven-segment displayed is removed and no longer displayed and, in its place, the numerical character '2' is shown in a different font.

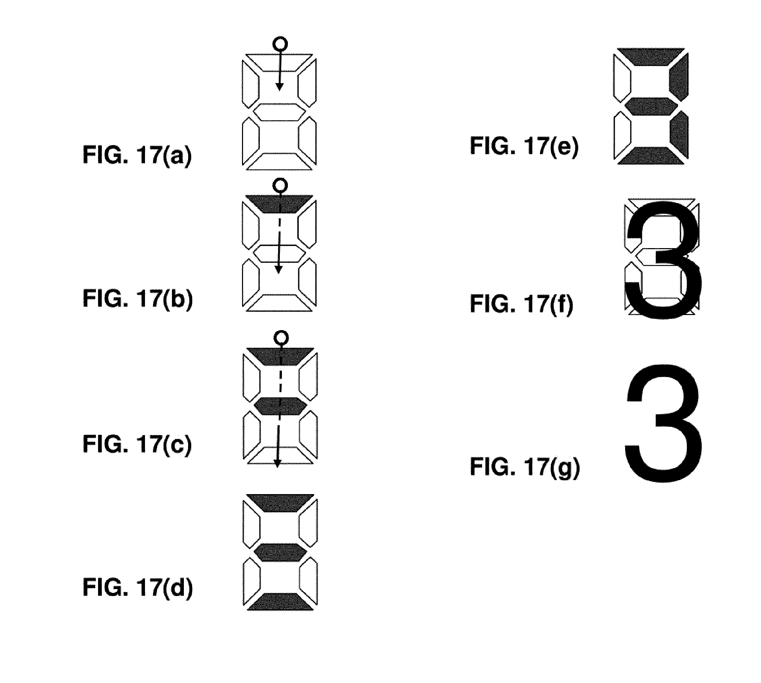

Turning to Figs. 17(a) to 17(g), example stages of a touch gesture being used to display the number '3' are provided. The visual feedback of the highlighted segments corresponding to the touch gestures is similar to the visual feedback shown in Figs. 16(a) to 16(h). Fig. 17(a) shows a seven-segment display shown in a neutral mode. As per Figs. 17(b), 17(c) and 17(d), the touch gesture is a substantially straight line that highlights the three horizontal segments. The mobile device 100 recognizes that the highlighted three horizontal segments is a short hand representation of the number '3'. As a result, the mobile device displays the number '3' by highlighting the two vertical segments located on the right side, as per Fig. 17(e). In another example embodiment, the mobile device displays the number '3' in a different font on top of the seven-segment display, which is returned to its neutral mode. This is shown in Fig. 17(f). In another example embodiment, as per Fig. 17(g), the mobile device no longer displays the seven-segment display and, in its place, displays the number '3' in a different font.

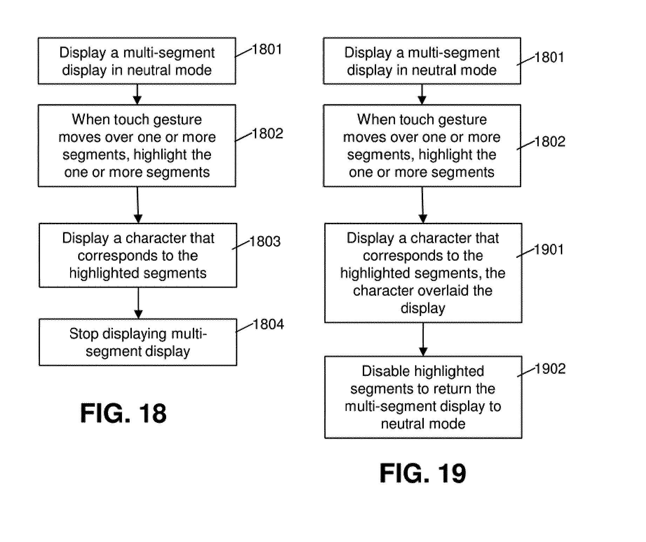

Turning to Fig. 18, an example set of computer executable instructions is provided for providing feedback about which segments have been activated. The activated segments are shown as highlighted segments. At 1801, the mobile device 100 displays a multi-segment display in a neutral mode. At 1802, when the mobile device detects that the touch gesture moves over one or more segments, the mobile device highlights the one or more segments. At 1803, the mobile device displays a character that corresponds to the highlighted segments. At 1804, the mobile device stops displaying the multi-segment display. This is shown, for example, in Fig. 17(g).

Turning to Fig. 19, an example set of computer executable instructions is provided for providing feedback, in a similar approach to the instructions of Fig. 18. Operations 1801 and 1802 are performed. At 1901, the mobile device 100 displays a character that corresponds to the highlighted segments, and the character is displayed overlaid the multi-segment display. At 1902, the mobile device disables the highlighted segments in order to return the multi-segment display to a neutral mode. This is shown, for example, in Fig. 17(f).

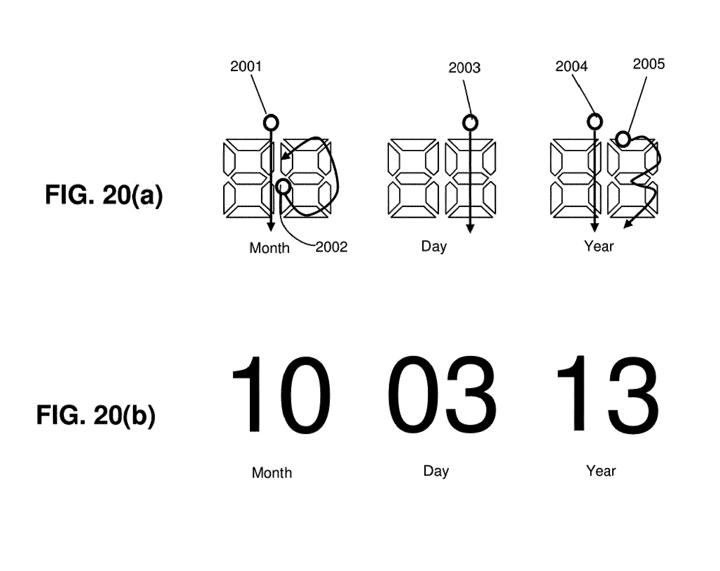

Turning to Fig. 20(a) and Fig. 20(b), an example of using touch gestures and multi-segment displays is shown in the context of inputting a date. Fig. 20(a) shows several multi-segment displays for the month, day, and year. The multi-segment displays are shown in a neutral mode. Touch gestures 2001 and 2002 are used to input the numbers '1' and '0' for the month.

For setting the day, there is a first and a second multi-segment displays. The touch gesture 2003 is a vertical swipe down the middle of the second multi-segment display, and this results in displaying the numbers '03' for the day.

For setting the year, the gestures 2004 and 2005 are used to activate segments representing a '1' and a '3'.

Turning to Fig. 20(b), the result of the touch gestures overlaid the respective multi-segment displays is a date shown in a different font. The date is shown as '10' for the month, '03' for the day, and '13' for the year.

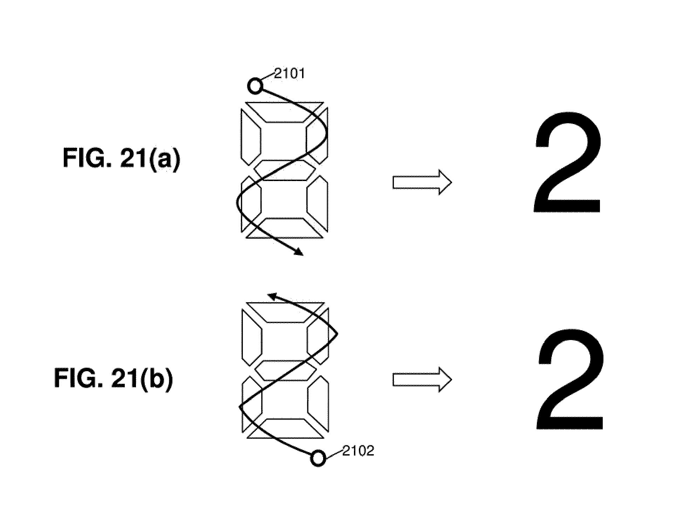

It can also be appreciated that the touch gestures can have different sequences to represent the same characters. For example, turning to Fig. 21(a), a touch gesture 2101 from top to bottom is used to display the number '2'. In another example, turning to Fig. 21(b), a touch gesture 2102 from bottom to top is also used to display the same number '2'.

In an example embodiment, various touch gestures can be used to show the same character. A mapping of the touch gestures in relation to a multi-segment display can be used to identify the appropriate character.

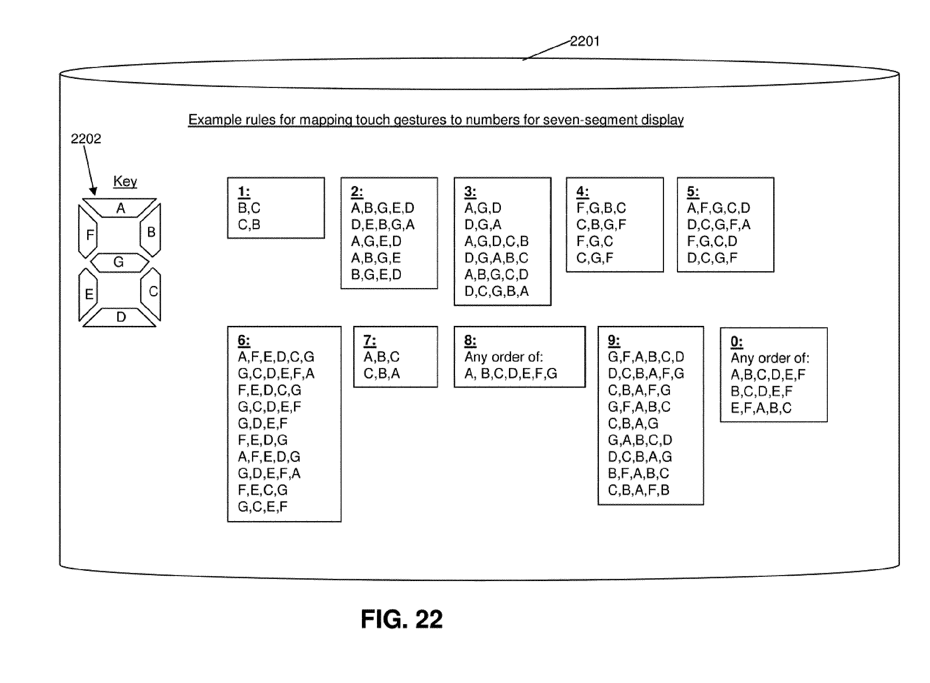

Examples of rules 2201 for mapping touch gestures numbers for a seven segment display is shown in Fig. 22. A key 2202 is displayed showing the seven segments of a seven-segment display and each of the segments are identified by the letters A, B, C, D, E, F and G. Mappings for the digits 1, 2, 3, ... , 9, and 0 are shown according to various combinations of the seven segments. For example, if the segments B and C are activated, then the numeral '1' will be selected. In another example, if the segments G, F, A, B, and C are activated, then the numeral '9' will be selected. In some cases, the order of the activation of the segments will determine which number is selected. In other cases, the order of activation of the segments does not affect which number is selected. As shown by the example rules in Fig. 22, combinations of activated segments that resemble a character, or are similar enough to a character, can be used to invoke the display of the character. In this way, loose tracing gestures can be used.

In other example embodiments, characters can be recommended by highlighting certain segments of a multi-segment display. A recommended character or recommended characters can be based on commonly used times or dates.

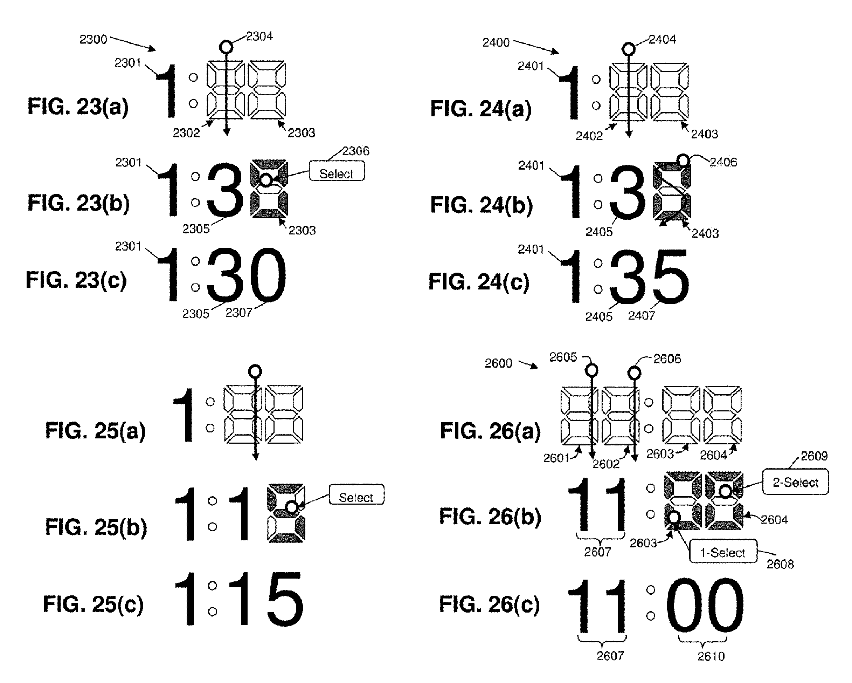

Turning to Fig. 23(a), a time interface 2300 is shown having the hour value 2301 displayed as '1', followed by two multi-segment displays 2302, 2303 in a neutral mode representing the minute value. A touch gesture 2304 is received and it is a vertically downward gesture over the middle of the multi-segment display 2302. In Fig. 23(b), the multi-segment display 2302 is replaced by the numeral '3' 2305. The remaining multi-segment display 2303 is still displayed and certain of its segments are automatically highlighted to show a suggested numeral '0'. In other words, when a user enters in a first minute digit '3', the mobile device 100 will suggest a second minute digit '0', because the minute value '30' is commonly used when selecting a time, for example, to schedule meetings. When the mobile device receives a tap gesture or, more generally, a selection input 2306 on the multi-segment display 2303, the mobile device recognizes that the suggested number '0' has been confirmed by the user. In Fig. 23(c), the time interface 2300 shows the final time as '1:30'. In particular, the multi-segment display 2303 is replaced with the numeral '0' 2307 in a different font.

Turning to Fig. 24(a), an example time interface 2400 is shown similar to the time interface 2300. The interface 2400 includes a '1' shown in the hour value and two multi-segment displays 2402, 2403 shown in a neutral mode. A touch gesture 2404 is received over the display 2402 and it is used to display the numeral '3', as shown in Fig. 24(b). In Fig. 24(b), the display 2403 is still shown, but certain of its segments are highlighted to suggest the number '0', so that the minute value is '30'. However, in this example, the user wishes to display the minute value '35' instead of '30'. Therefore, the mobile device receives a touch gesture 2406 over the display 2403, which represents a number '5'. Turning to Fig. 24(c), the number '5' 2407 is shown in place of the multi-segment display 2403, and the completed time value is shown as '1:35'.

Figs. 25(a), 25(b) and 25(c) are similar to Figs. 23(a), 23(b) and 23(c), but show the mobile device recommending the number '5' as the second minute digit after receiving a touch gesture to display a number '1' in the first minute digit. As shown in Fig. 25(b), when the mobile device receives a selection input (e.g. a tap gesture) over the suggested '5' in the multi-segment display, the number '5' is shown in a different font and is positioned in place of the multi-segment display, as per Fig. 25(c). The mobile device predicts that the user is attempting to enter in the minute value '15', and therefore suggests the number '5'. In other words, the commonly used minute value '15' can be more quickly and conveniently displayed using this method.

Figs. 26(a), 26(b) and 26(c) also show the different stages for setting a time value '11:00'. In Fig. 26(a), a time interface 2600 is shown, including multi-segment displays 2601 and 2602 for the hour value and multi-segment displays 2603 and 2604 for the minute value. Touch gestures 2605 and 2606 are used to display the hour value '11', as shown in Fig. 26(b). The multi-segment displays 2603 and 2604 are still shown, but certain segments are highlighted to suggest the minute value '00'. A mobile device can receive selection inputs 2608 and 2609 (e.g. tap gestures) on the displays 2603 and 2604 to quickly display the suggested minute value '00'. Although not illustrated, in another example embodiment, a single selection input (e.g. a single tap gesture) is sufficient to confirm and, thus, display the suggested minute value '00'. In Fig. 26(c), the hour value 2607 is '11' and the minute value 2610 is '00'. In this example, the mobile device predicted that the minute value would be '00' after selecting the hour value, and therefore suggested the numerals '0' and '0'.

As another example embodiment, a suggested character for a multi-segment display can be shown above the multi-segment display.

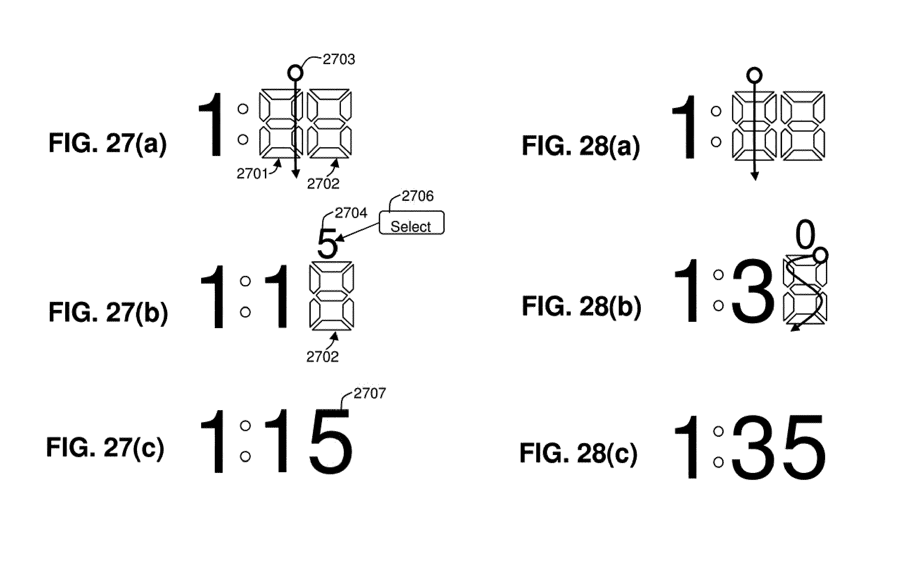

For example, in Fig. 27(a), two multi-segment displays 2701 and 2702 are shown for selecting a minute value. The mobile device detects a touch gesture 2701 over the first multi-segment display 2701, representing a '1'. Consequently, a number '5' 2704 is displayed in close proximity to the second multi-segment display 2702 as a suggested value. For example, the number '5' 2704 is displayed on top of the display 2702. When a selection input 2706 (e.g. a tap gesture) for selecting the number '5' 2704 is detected, then, as illustrated in Fig. 27(c), a numeral '5' 2707 is shown in place of the display 2702. The minute value '15' is therefore displayed.

Figs. 28(a), 28(b) and 28(c) show another example in which a number '0' is shown above a multi-segment display as a suggested value. However, as shown in Fig. 28(b), a touch gesture on the multi-segment display is received to input a different number, namely the number '5'. This example shows that a user does not need to necessarily use the suggested value, and can still use a touch gesture to trace a character over the multi-segment display.

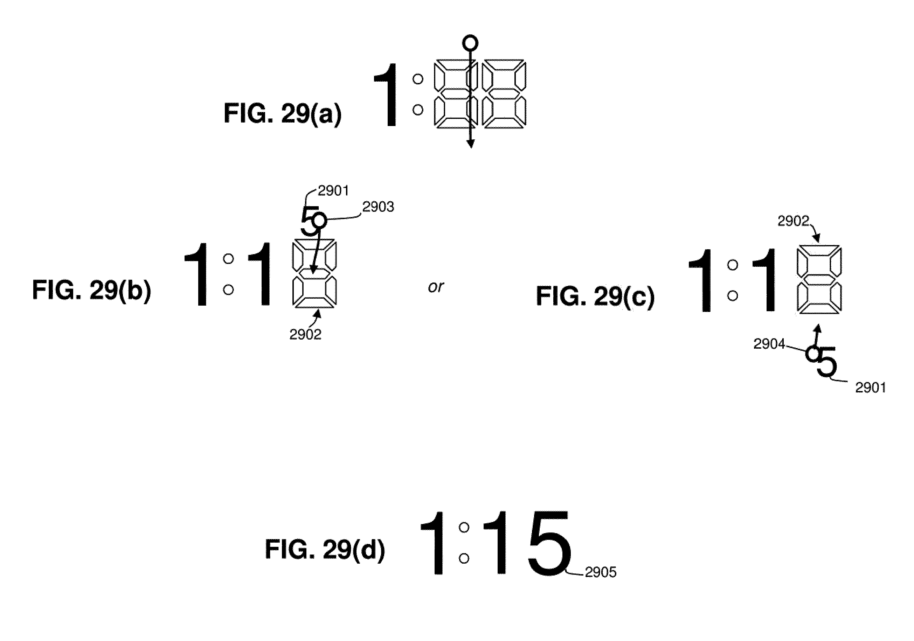

Figs. 29(a), 29(b), 29(c) and 29(d) show another example of selecting a suggested character to be displayed in place of a multi-segment display. After receiving an initial touch gesture on a first multi-segment display, as shown in Fig. 29(a), a suggested number '5' 2901 is shown on top of a second multi-segment display 2902 in Fig. 29(b). A swipe or flicking touch gesture 2903, which starts at the number '5' 2901 and moves in a direction towards the multi-segment display 2902, is received. This gesture 2903 displays the number '5' 2905 in place of the display 2902, as shown in Fig. 29(d).

As an alternative example to Fig. 29(b), in Fig. 29(c), the number '5' 2901 is shown below the multi-segment display 2902. The suggested character can be shown in various locations relative to the subject multi-segment display. A swipe or flicking touch gesture 2904 starting from the '5' 2901 towards the multi-segment display 2902 is used to display the '5', as shown in Fig 29(d).

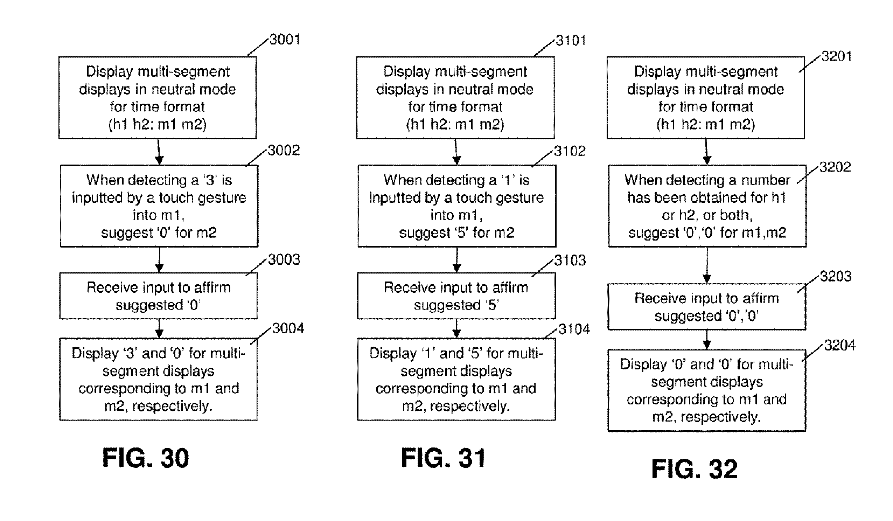

Turning to Fig. 30, an example set of computer executable instructions is provided for selecting a character using a suggested character. At 3001, the mobile device 100 displays several multi-segment displays for a time format (e.g. h1 h2: m1 m2 representing the hour and minute values). The multi-segment displays are initially shown in a neutral mode. At 3002, when the mobile device detects a '3' is inputted by a touch gesture overlaid the multi-segment display m1, the mobile device displays a suggestion of '0' for the multi-segment display m2. At 3003, the mobile device receives an input that affirms the suggested '0' character. At 3004, the mobile device displays the characters '3' and '0' corresponding to the multi-segment displays m1 and m2, respectively. An example of this is illustrated in Figs. 23(a), 23(b) and 23(c).

Turning to Fig. 31, an example set of computer executable instructions is provided for selecting a suggested character in the context of the minute value '15'. Operation 3101 is the same as operation 3001. At 3102, when detecting a '1' is inputted via a touch gesture overlaid the multi-segment display m1, the character '5' is displayed as a suggestion for the multi-segment display 'm2'. After receiving an input to select the suggested character at 3103, the mobile device displays the characters '1' and '5' corresponding to the multi-segment displays m1 and m2, respectively, as per 3104. Examples of this are illustrated in Figs. 25(a), 25(b) and 25(c), Figs. 27(a), 27(b) and 27(c), and in Figs. 29(a), 29(b), 29(c) and 29(d).

Turning to Fig. 32, an example set of computer executable instructions is provided for selecting a suggested character in the context of the minute value '00'. Operation 3201 is the same as operation 3001. At 3202, when the mobile device 100 detects a number has been obtained for the multi-segment displays h1 or h2, or both, the mobile device suggests the characters '0' and '0' for the multi-segment displays m1 and m2. At 3203, the mobile device receives an input to select the suggested characters. At 3204, the mobile device displays '0' and '0' in the multi-segment displays m1 and m2.

The above principles for displaying a suggested character and selecting the same can be used for dates, telephone numbers, money values, names, postal or zip codes, etc. The suggested characters are determined based on the context of the application.

The suggested characters can also be take into account the habits of the user. For example, in the context of time, if a user consistently schedules meetings to start at 35^{th} minute of an hour (e.g. 10:35 am, 1:30 pm, 2:35 pm, etc.), then the mobile device 100 will suggest the minute value '35'. For example, if the mobile device detects that a user is scheduling a meeting and has activated segments to display a '3' for the first minute digit, then the mobile device will highlight segments for the second minute digit that correspond to the suggested number '5'. When a tap gesture is received on the second minute digit, the number '5' is displayed, so that the minute value '35' is set in the display. In other words, the suggested character is associated with the displayed character based on data previously provided by a user.

Other suggested characters for other contexts can also be learned by the mobile device according to the user's inputs or habits (e.g. repeated actions). For example, when inserting alphabets for a month, if the mobile device has detected that the user has entered in the characters 'DEC' before on previous occasions, the mobile device will highlight segments in the multi-segment displays to suggest the letters 'D', 'E' or 'C', or the combination of those letters.

In another example embodiment, if two or more multi-segment displays are shown, if one of the displays is used, the other display or the other displays may automatically disappear, or show a value of '0'.

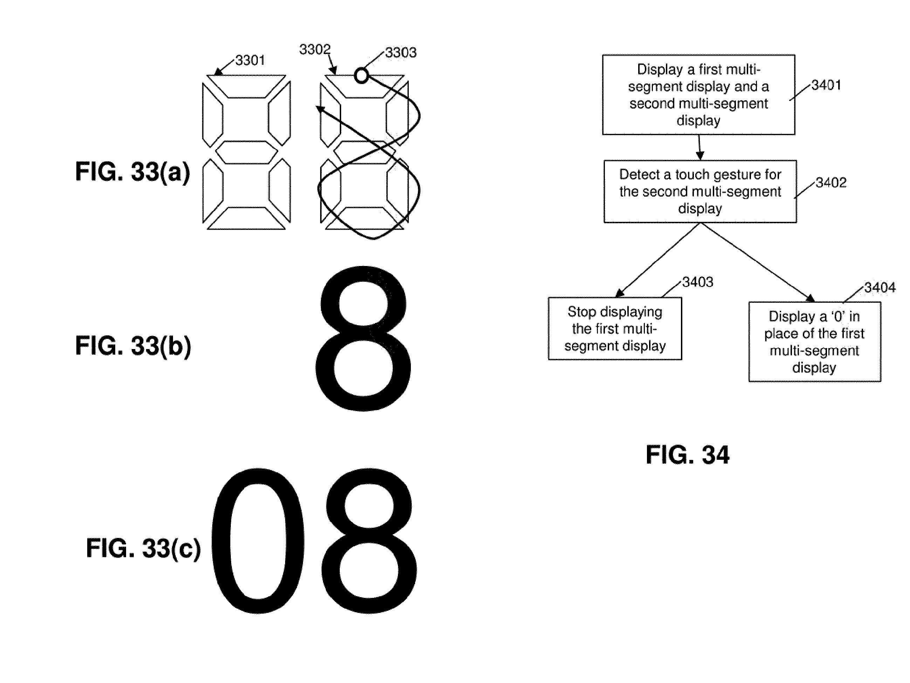

Turning to Fig. 33(a), two multi-segment displays 3301 and 3302 are shown beside each other and are in a neutral mode. More particularly, the first multi-segment display 3301 precedes the second multi-segment display 3302. The displays 3301 and 3302 can be used to select a date or time value, for example. A touch gesture 3303 is first detected on the multi-segment display 3302 to form the number '8'.

As per Fig. 33(b), the mobile device stops displaying the multi-segment displays 3301 and 3302, and in place of the display 3302, the number '8' is shown. For example, such an embodiment can be used to select the hour value of time to show eight o'clock.

Alternatively to Fig. 33(b), in Fig 33(c), after the gesture 3303 is received, the multi-segment displays 3301 and 3302 are no longer displayed and the numbers '0' and '8' are shown place of the displays 3301 and 3302, respectively. For example, such an embodiment can be used to select a month, day or year value, according to the format mm/dd/yy.

In other words, the user does not need to provide an input that the value for the first multi-segment display 3301 is null (e.g. as per Fig. 33(b)) or is '0' (e.g. as per Fig. 33(c)). The null or '0' value is automatically shown by the mobile device 100.

Turning to Fig. 34, an example set of computer executable instructions is provided to automatically display a null value or a '0' value. At 3401, the mobile device 100 displays a first multi-segment display and a second multi-segment display. At 3402, the mobile device 3402 detects a touch gesture for the second multi-segment display. At 3403, the mobile device stops displaying the first multi-segment display. Alternatively to 3403, at 3404, the mobile device displays a '0' in place of the first multi-segment display.

In another example embodiment, when a user provides a touch gesture over a multi-segment display, the displayed character may not be correct or as the user intended. The mobile device then provides a control to allow a user to modify the displayed character. The modified character can be saved in relation to the touch gesture. In future use, when the same touch gesture is detected again, the modified character is displayed.

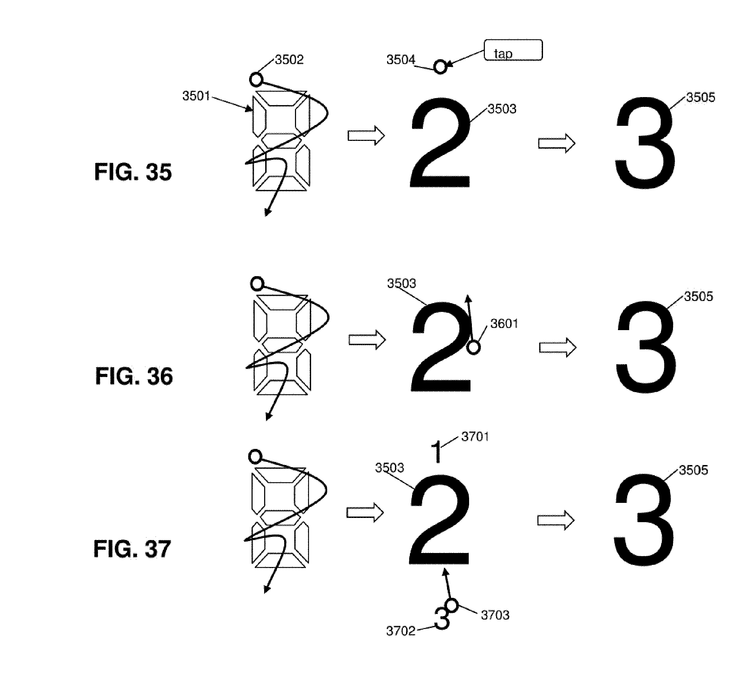

Turning to Fig. 35, a multi-segment display 3501 is displayed in a neutral mode. The mobile device 100 detects a touch gesture 3502. In this example embodiment, the method of detecting which segments are activated by the touch gesture is used to select a number. Examples of such an approach are shown in Figs. 12, 13 and 22. Therefore, based on the gesture 3502 over the display 3501, the number '2' 3503 is shown. However, in this example, the user intended to display a '3'. The user can modify the number '2' 3503 by touching or tapping 3504 above the number '2' 3503. When the mobile device receives such a modification input, the mobile device will show the modified number '3'.

The mobile device saves a mapping of the gesture 3502 in relation to the modified number '3'. Therefore, next time a similar gesture is detected, a '3' will be displayed instead of a '2'. In another example embodiment, the occurrence of the gesture and the modified number '3' is detected a predetermined number of times before the mapping is established, so that when the gesture is detected, the modified number is automatically displayed.

In another example, the user can tap below the number '2' 3503 to display the modified number '3'. In other words, tapping above the displayed number shows either the preceding number or the proceeding number. Conversely, tapping below the displayed number shows either the proceeding number or the preceding number.

Turning to Fig. 36, an example embodiment similar to Fig. 35 is shown for modifying a displayed number '2'. The mobile device 100 receives a swiping gesture 3601 that starts from the number '2' 3503 and moves in an upwards direction. This displays the proceeding number '3'. Alternatively, the upwards swipe can be used to show the preceding number '1'. The converse can also be used for downwards swiping gestures.

Turning to Fig. 37, another example embodiment that is similar to Fig. 35 is shown. The preceding number '1' 3701 and the proceeding number '3' 3702 are respectively shown above and below the displayed number '2' 3503. When the mobile device 100 receives a touch gesture 3703 that flicks or swipes the number '3' 3702 towards the number '2', the modified number '3' 3505 is shown in place of the previously displayed number '2' 3503.

The suggested characters depend on the context of the application. In the example of numbers for the minute value, the character series consists of the sequence [1, 2, 3, ... , 9, 0]. In the example of the first digit d1 in the days format d1d2, more commonly expressed as 'dd', the character series consists of the sequence [0, 1, 2, 3], since there will never be more than forty days in a month. In another example, if the characters are alphabets, the sequence of characters is [A, B, C, .... , Z].

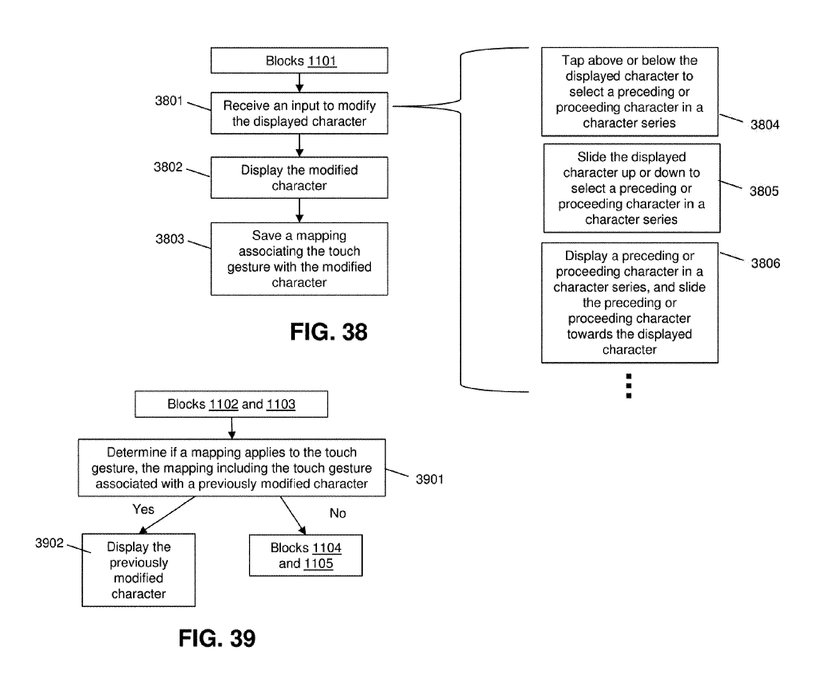

Turning to Fig. 38, an example set of computer executable instructions is provided for modifying a character and saving the modification as a mapping. After the instructions of 1101 are performed, which were previously described with respect to Fig. 11, the mobile device 100 receives an input to modify the displayed character 3801. At 3802, the mobile device displays the modified character. At 3803, the mobile device saves a mapping associating the touch gesture with the modified character.

Examples of implementing 3801 are provided in 3804, 3805 and 3806. In particular, at 3804, the mobile device detects a tap gesture above or below the displayed character to select a preceding or proceeding character in a character series. At 3805, the mobile device detects a slide or a swipe gesture on the displayed character, in an upward or downward direction. The mobile device then displays the preceding or proceeding character in a character series. At 3806, the mobile device displays a preceding or proceeding character in a character series, and detects a flick or swipe gesture that moves the preceding or proceeding character towards the displayed character. The mobile device then displays the preceding or proceeding character.

Turning to Fig. 39, an example set of computer executable instructions are provided for using the saved mapping of Fig. 38. After operations 1102 and 1103 are performed, the mobile device 100 determines if a mapping applies to the touch gesture, the mapping including the touch gesture associated with a previously modified character 3901. If there is a mapping that applies, at 3902, the mobile device displays the previously modified character. If there is no applicable mapping, then the mobile device performs the operations of 1104 and 1105.

The methods, user interfaces and systems described above allow a user to select characters using an interface that uses less real-estate on the mobile device's touch screen display. Furthermore, using the above approaches, a user can more quickly and more accurately input the desired character for display on using a touch screen.

Example embodiments and example aspects of the systems and methods are described below.

An example method for displaying a character on an electronic device is provided. The method includes: displaying a multi-segment display; detecting a touch gesture overlaid the multi-segment display; activating segments of the multi-segment display that correspond to the touch gesture; and displaying the character that corresponds to the activated segments.

In an aspect, the multi-segment display is initially displayed in a neutral mode. In another aspect, the method further includes highlighting the activated segments. In another aspect, the method further includes no longer displaying the multi-segment display when the character is displayed. In another aspect, the multi-segment display is initially displayed in a neutral mode and the method further includes: highlighting the activated segments; and returning the multi-segment display to the neutral mode when the character is displayed overlaid the multi-segment display. In another aspect, the character is displayed in a different font than the multi-segment display. In another aspect, the segments are activated by detecting that the touch gesture position coincides with the segments. In another aspect, the multi-segment display is used to select a time or a date. In another aspect, the multi-segment display is a seven-segment display. In another aspect, the method further includes receiving an input to change the displayed character to a modified character; displaying the modified character; and saving a mapping associating the touch gesture with the modified character. In another aspect, the input includes receiving another touch gesture to display the modified character, and the modified character is a preceding character or a proceeding character relative to the displayed character in a character series. In another aspect, the method further includes displaying the modified character when detecting the same touch gesture again. In another aspect, another multi-segment display is displayed, and the method further includes: highlighting segments on the other multi-segment display that correspond to a suggested character; detecting a selection input on the other multi-segment display; and displaying the suggested character. In another aspect, the selection input is a tap gesture.

An example method for displaying a character on an electronic device is provided. The method includes: displaying a first multi-segment display and a second multi-segment display; detecting a touch gesture overlaid one of the first and the second multi-segment displays; activating segments of the one of the first and the second multi-segment displays, the segments corresponding to the touch gesture; displaying a first character associated with the one of the first and the second multi-segment displays, the first character corresponding to the activated segments; and modifying the other one of the first and the second multi-segment displays.

In another aspect, the other one of the first and the second multi-segment displays is modified based on the first character. In another aspect, the other one of the first and the second multi-segment displays is modified to display a suggested character, the suggested character associated with the first character. In another aspect, the method further includes receiving an input to display a second character equivalent to the suggested character in association with the other one of the first and the second multi-segment displays. In another aspect, the suggested character is associated with the first character based on data previously provided by a user.

In another aspect, the one of the first and the second multi-segment displays is the first multi-segment display and the other one of the first and the second multi-segment displays is the second multi-segment display; the first character displayed is a numeral '3'; and the second multi-segment display is modified by highlighting segments to display a numeral '0'.

In another aspect, the one of the first and the second multi-segment displays is the first multi-segment display and the other one of the first and the second multi-segment displays is the second multi-segment display; the first character displayed is a numeral '1'; and the second multi-segment display is modified by highlighting segments to display a numeral '5'.

In another aspect, the one of the first and the second multi-segment displays is the second multi-segment display and the other one of the first and the second multi-segment displays is the first multi-segment display; and the first multi-segment display is modified by displaying a numeral '0' or modified by no longer displaying the first multi-segment display.

An example electronic device is provided and it includes a processor, a touch-sensitive input mechanism and memory. The memory stores computer executable instructions for: displaying a multi-segment display; detecting a touch gesture overlaid the multi-segment display; activating segments of the multi-segment display that correspond to the touch gesture; and displaying the character that corresponds to the activated segments.

It will be appreciated that the examples and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above has been described with reference to certain specific examples, various modifications thereof will be apparent to those skilled in the art as outlined in the appended claims.

## Claims

1. A method for displaying a character on an electronic device, comprising:
displaying a multi-segment display;
detecting a touch gesture overlaid the multi-segment display;
activating segments of the multi-segment display that correspond to the touch gesture; and
displaying the character that corresponds to the activated segments.

2. The method of claim 1 wherein the multi-segment display is initially displayed in a neutral mode.

3. The method of claim 1 further comprising highlighting the activated segments.

4. The method of claim 1 further comprising no longer displaying the multi-segment display when the character is displayed.

5. The method of claim 1 wherein the multi-segment display is initially displayed in a neutral mode and the method further comprises:
highlighting the activated segments; and
returning the multi-segment display to the neutral mode when the character is displayed overlaid the multi-segment display.

6. The method of any preceding claim wherein the character is displayed in a different font than the multi-segment display.

7. The method of any preceding claim wherein the segments are activated by detecting that the touch gesture position coincides with the segments.

8. The method of any preceding claim further comprising receiving an input to change the displayed character to a modified character; displaying the modified character; and saving a mapping associating the touch gesture with the modified character.

9. The method of claim 8 wherein the input is receiving another touch gesture to display the modified character, and the modified character is a preceding character or a proceeding character relative to the displayed character in a character series.

10. The method of claim 8 or 9 further comprising displaying the modified character when detecting the same touch gesture again.

11. The method of claim 1 wherein another multi-segment display is displayed, and the method further comprising:
highlighting segments on the other multi-segment display that correspond to a suggested character;
detecting a selection input on the other multi-segment display; and
displaying the suggested character.

12. The method of claim 11 wherein the selection input is a tap gesture.

13. A method of displaying a character on an electronic device, comprising:
displaying a first multi-segment display and a second multi-segment display;
detecting a touch gesture overlaid one of the first and the second multi-segment displays;
activating segments of the one of the first and the second multi-segment displays, the segments corresponding to the touch gesture;
displaying a first character associated with the one of the first and the second multi-segment displays, the first character corresponding to the activated segments; and
modifying the other one of the first and the second multi-segment displays.

14. The method of claim 13 wherein the other one of the first and the second multi-segment displays is modified based on the first character.

15. The method of claim 13 wherein the other one of the first and the second multi-segment displays is modified to display a suggested character, the suggested character associated with the first character.

16. An electronic device comprising a processor, a touch-sensitive input mechanism and memory, the memory storing computer executable instructions for performing the method of any one of claims 1 to 15.

## Amended claims

### Amended claims in accordance with Rule 137(2) EPC.

**1.** A method for displaying a character on an electronic device, comprising:
displaying a first multi-segment display;
detecting a touch gesture overlaid the first multi-segment display;
activating segments of the first multi-segment display that correspond to the touch gesture; and
displaying the character that most closely corresponds to a pattern defined by the activated segments in replacement of the first multi-segment display such that the first multi-segment display is no longer displayed.

**2.** The method of claim 1 wherein the first multi-segment display is initially displayed in a neutral mode.

**3.** The method of claim 1 further comprising highlighting the activated segments.

**4.** The method of claim 1 wherein the first multi-segment display is initially displayed in a neutral mode and the method further comprises:
highlighting the activated segments; and
returning the first multi-segment display to the neutral mode when the character is displayed overlaid the first multi-segment display.

**5.** The method of claim 1 wherein the character is displayed in a different font than the first multi-segment display.

**6.** The method of claim 1 wherein the segments are activated by detecting that the touch gesture position coincides with the segments.

**7.** The method of claim 1 further comprising receiving an input to change the displayed character to a modified character; displaying the modified character; and saving a mapping associating the touch gesture with the modified character.

**8.** The method of claim 7 wherein the input is receiving another touch gesture to display the modified character, and the modified character is a preceding character or a proceeding character relative to the displayed character in a character series.

**9.** The method of claim 7 further comprising displaying the modified character when detecting the same touch gesture again.

**10.** The method of claim 1 wherein another multi-segment display is displayed, and the method further comprising:
highlighting segments on the other multi-segment display that correspond to a suggested characterafter receiving the touch gesture on the first multi-segment display and displaying the character, the highlighted segments based on the character for the first multi-segment display;
detecting a selection input on the other multi-segment display based on the suggested character; and
displaying the suggested character in replacement of the other multi-segment display.

**11.** The method of claim 10 wherein the selection input is a tap gesture.

**12.** The method of claim 1, comprising:
displaying a second multi-segment display for receiving a second touch gesture thereon;
modifying the second multi-segment display based on the character displayed corresponding to the activated segments for the first multi-segment display.

**13.** An electronic device comprising a processor, a touch-sensitive input mechanism and memory, the memory storing computer executable instructions for performing the method of any one of claims 1 to 12.
